# EUROPÄISCHE PATENTSCHRIFT

(11) **EP 3 024 262 B1**
(45) Veröffentlichungstag und Bekanntmachung des Hinweises auf die Patenterteilung: **29.04.2020**
(21) Anmeldenummer: 15182836.5
(22) Anmeldetag: 28.08.2015
(51) Int. Cl.: H04W 12/06

(54) **VERFAHREN ZUR AUTHENTIFIZIERUNG EINER BERECHTIGUNG EINES BENUTZERS EINES KRAFTFAHRZEUGES, KRAFTFAHRZEUG UND COMPUTERPROGRAMM**
METHOD FOR AUTHENTICATING AN AUTHORIZATION OF THE USER OF A MOTOR VEHICLE, MOTOR VEHICLE AND COMPUTER PROGRAM
PROCEDE D'AUTHENTIFICATION D'UNE AUTORISATION D'UN UTILISATEUR D'UN VEHICULE AUTOMOBILE, VEHICULE AUTOMOBILE ET PROGRAMME D'ORDINATEUR

(30) Priorität: 20.11.2014 DE 102014223663
(43) Veröffentlichungstag der Anmeldung: 25.05.2016
(73) Patentinhaber: Volkswagen Aktiengesellschaft, 38440 Wolfsburg (DE)
(72) Erfinder: Schneider, Immo, 38110 Braunschweig (DE)

(56) Entgegenhaltungen:
- EP-A1- 2 211 499
- DE-A1-102012 012 565
- DE-A1-102013 003 044
- US-A1- 2012 313 796
- US-A1- 2014 187 149

## Beschreibung

Die vorliegenden Ausführungsbeispiele liegen auf dem Gebiet der Authentifizierung einer Berechtigung eines Benutzers eines Kraftfahrzeuges.

Vernetzungssysteme für Kraftfahrzeuge, wie z.B. Connected Car oder Car-Net, werden häufig bei Kraftfahrzeugen angewendet, um beispielsweise für einen Benutzer einen leichteren Zugang zu Verkehrsinformationen, Zielsuche oder auch einen Abruf von Fahrzeuginformationen oder Fahrtdaten von außerhalb des Fahrzeugs zu ermöglichen. Ein Registrierungsprozess für Benutzer kann jedoch komplex und fehleranfällig sein, da es ggf. erforderlich sein kann, verschiedene Sicherheitscodes abzulesen und an anderer Stelle manuell wieder einzugeben.

Ferner können bei dem Registrierungsprozess Lösungen eingesetzt werden, die weitere physische Elemente umfassen, z.B. Schlüsselanhänger oder Briefe mit Rubbelcode, Post-Ident, oder eine Überweisung von Cent-Beträgen. Auch solche Lösungen können in manchen Fällen fehleranfällig, z.B. gegen Übertragungsfehler, sein. Eine solche Komplexität oder auch durch den Benutzer erlebter Misserfolg kann zu einem unnötigen Verlust von Kunden oder Betreuungsaufwand durch einen Kundendienst wie eine Werkstatt oder einen telefonischen Kundendienst (Call-Center) führen. Zudem kann dadurch eine Wahrnehmung eines Produktes im Markt durch den Benutzer ungünstig beeinflusst werden. Ferner kann dies auch Registrierungsprozesse bei anderen Anwendungen über Kraftfahrzeuge hinaus betreffen.

In der Druckschrift US 2014/0187149 A1 wird ein Verfahren zum Pairen eines mobilen Endgeräts mit einem Fahrzeug vorgeschlagen. Das Fahrzeug stellt dazu einen Uniform Resouce Identifier (URI) bereit, der auf das mobile Endgerät übertragen wird. Das mobile Endgerät ruft in Abhängigkeit von den in dem URI enthaltenen Informationen eine Applikation von einem Server ab, um über diese das Pairing mit dem Fahrzeug durchzuführen. Der URI kann einen Authentifizierungscode umfassen.

In der Druckschrift US 2012/0313796 A1 wird ferner ein Fahrzeugsteuerungssystem vorgeschlagen.

Mithin ist es wünschenswert, ein Konzept für eine vereinfachte Registrierung und Authentifizierung eines Benutzers für ein Kraftfahrzeug zu verbessern.

Diesem Bedarf tragen ein Verfahren und ein Computerprogramm mit den Merkmalen der unabhängigen Patentansprüche Rechnung.

Einige Ausführungsbeispiele beziehen sich auf ein Verfahren zum Zuordnen einer Identität eines Benutzers zu einer Identität eines Kraftfahrzeuges. Das Verfahren umfasst ein Senden eines Anforderungssignals für einen Berechtigungscode an einen Rechner. Dabei umfasst das Anforderungssignal zusätzlich eine Information über eine Identität des Kraftfahrzeuges. Das Verfahren umfasst außerdem ein Bereitstellen des Berechtigungscodes durch den Rechner an ein von dem Kraftfahrzeug umfasstes Bordgerät. Zudem umfasst das Verfahren ein Darstellen des Berechtigungscodes durch eine von dem Bordgerät umfasste Anzeigeeinrichtung als zweidimensionalen Matrix-Code. Das Verfahren umfasst ferner ein Erfassen des Berechtigungscodes von einer Anzeigeeinrichtung durch ein mobiles Gerät. Weiterhin umfasst das Verfahren ein Übertragen des Berechtigungscodes und einer Erkennungsinformation des mobilen Geräts durch das mobile Gerät an den Rechner. Außerdem umfasst das Verfahren ein Zuordnen des Berechtigungscodes und der Information über die Identität des Kraftfahrzeuges zu einer zuvor durch den Rechner abgespeicherten Identität des Benutzers anhand der Erkennungsinformation. Das Verfahren kann eine Identifizierung eines Hauptnutzers eines Fahrzeugs mit Hilfe einer auf dem mobilen Gerät laufenden Anwendung (Application, App) ermöglichen. Das Verfahren kann zudem für eine vereinfachte Registrierung eines Benutzers für ein Kraftfahrzeug verwendet werden. Ferner kann das Verfahren einen optischen Austausch von Daten ermöglichen.

Darüber hinaus schaffen weitere Ausführungsbeispiele auch ein Programm oder Computerprogramm mit einem Programmcode zum Durchführen des genannten Verfahrens, wenn der Programmcode auf einem Computer, einem Prozessor oder einer programmierbaren Hardwarekomponente, wie z.B. einer applikationsspezifischen integrierten Schaltung (ASIC), ausgeführt wird.

Nachfolgend werden unter Bezugnahme auf die beigefügten Figuren einige exemplarische Ausführungsbeispiele näher beschrieben und erläutert. Es zeigen im Einzelnen:
- Fig. 1: ein Ablaufdiagramm eines Verfahrens zur Authentifizierung einer Berechtigung eines Benutzers eines Kraftfahrzeuges;
- Fig. 2: eine Darstellung eines Berechtigungscodes für einen Benutzer innerhalb eines Kraftfahrzeugs, gemäß einem Ausführungsbeispiel;
- Fig. 3: eine Illustration von Bedienschritten aus Sicht eines Benutzers im Rahmen eines der beispielhaften Verfahren;
- Fig. 4: ein System umfassend ein Kraftfahrzeug und einen Rechner; und
- Fig. 5: ein Ablaufdiagramm eines Verfahrens zur Authentifizierung einer Berechtigung eines Benutzers eines Kraftfahrzeuges gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

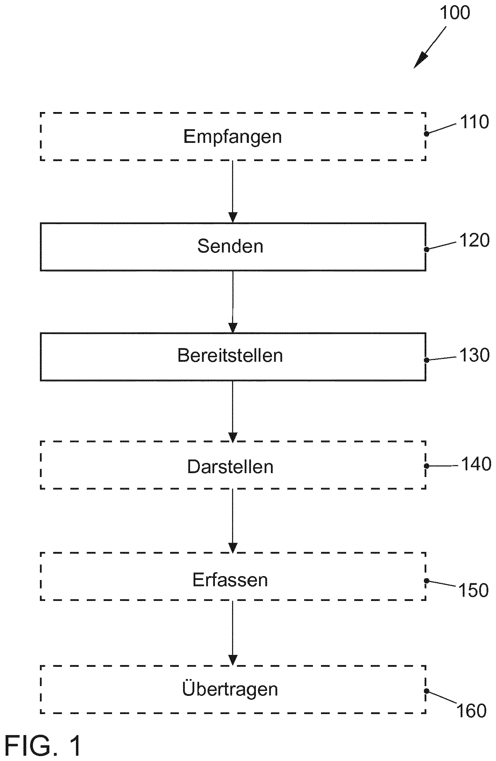

Fig. 1 zeigt ein Ablaufdiagramm für ein Verfahren 100 zur Authentifizierung einer Berechtigung eines Benutzers eines Kraftfahrzeuges, gemäß einem Ausführungsbeispiel. Das Verfahren 100 umfasst ein Senden 120 eines Anforderungssignals für einen Authentifizierungscode an einen Rechner. Das Verfahren 100 umfasst zudem ein Bereitstellen 130 des Authentifizierungscodes durch den Rechner an ein von dem Kraftfahrzeug umfasstes Bordgerät. Ein Kraftfahrzeug kann hierbei ein Landfahrzeug wie Personen- oder Lastkraftwagen (Pkw, Lkw) oder in weiterem Sinne auch Wasser- oder Luftfahrzeuge umfassen. Das Senden 120 des Anforderungssignals kann gemäß verschiedenen Ausführungsbeispielen auf drahtlosem oder drahtgebundenem Wege erfolgen. Das Anforderungssignal kann z.B. durch eine Eingabe des Benutzers erzeugt werden. Der Authentifizierungscode kann z.B. eine Transaktionsnummer (TAN) umfassen, und über eine verschlüsselte Verbindung übertragen werden. Der Rechner kann z.B. einen über Internet erreichbaren Server oder Zentralrechner umfassen, welcher eine Datenbank mit Daten einer Mehrzahl von Benutzern und Fahrzeugen umfasst. Das Bordgerät kann z.B. ein Fahrassistenzsystem sein, und eine interne Kontrolleinheit umfassen, welche in das Fahrzeug integriert ist. Dies kann bewirken, dass der Authentifizierungscode lediglich in dem Fahrzeug zur Verfügung gestellt wird, und folglich eine Anwesenheit des Benutzers in dem Fahrzeug zur weiteren Nutzung erforderlich sein kann. Hierdurch kann eine mögliche Sicherheit vor eventuellem Datenmissbrauch oder unbefugtem Zugriff erhöht werden.

Das Verfahren 100 kann bei einem Verkauf mobiler Onlinedienste verwendet werden, bei denen eine Vernetzung von Fahrzeugen stattfindet. Dies können z.B. digitale Dienstleistungen für einen jeweils vereinbarten Zeitraum sein. Hierfür kann zuvor ein Vertragsabschluss zwischen einem Hauptnutzer der Dienstleistung (Kunde) sowie einem Anbieter oder Dienstleister vorgenommen werden. Für die Nutzung der mobilen Onlinedienste kann beispielsweise ein mobiles Gerät, wie z.B. ein Smartphone oder Tablet mit einer Anwendung (App) zum Datenaustausch zwischen einem Fahrzeug und einem weiteren Gerät (z.B. weiteres Fahrzeug, stationärer oder mobiler Rechner), verwendet werden.

Das Verfahren 100 kann für einen Registrierungsprozess zum Einsatz kommen, in dessen Verlauf Daten über die Person des Hauptnutzers, ein Identifizierungsmerkmal (z.B. Seriennummer) der App zum Datenaustausch zwischen Fahrzeug und weiterem Gerät, und eine Kennung eines Fahrzeugs, auf das sich die Dienstleistung bezieht, miteinander verknüpft werden. Bei einem Ausführungsbeispiel umfasst das Anforderungssignal eine Information über eine Identität des Fahrzeugs.

Für das Senden 120 des Anforderungssignals stehen gemäß verschiedenen Ausführungsbeispielen mehrere Wege zur Verfügung, die im Nachfolgenden noch näher beschrieben werden. Bei einem Ausführungsbeispiel erfolgt das Senden 120 von dem Bordgerät aus, welches von dem Fahrzeug umfasst ist.

Alternativ kann der Benutzer eine Fahrzeugidentifikationsnummer (Vehicle Identification Number, VIN) manuell in die App eingeben. Die App kann die VIN an den Rechner übertragen und den Authentifizierungscode, z.B. die TAN, anfordern. Alternativ kann der Benutzer die VIN manuell in ein durch den Rechner zur Verfügung gestelltes Portal eingeben und die TAN anfordern. Alternativ kann der Benutzer eine dem Bordgerät in dem Fahrzeug, z.B. die interne Kontrolleinheit, zugeordnete Taste betätigen und dabei einen weiteren Schalter, z.B. eine Klemme, einschalten. Die interne Kontrolleinheit kann dazu ausgebildet sein, diese Bedienfolge zu erkennen, und die VIN an den Rechner übertragen und die TAN anfordern. Hierbei ist die VIN durch das Anforderungssignal für die TAN umfasst. Alternativ kann die Anforderung für die TAN über einen Call-Center-Agenten an den Rechner übermittelt werden. Dabei kann die VIN von der internen Kontrolleinheit über das Call-Center bis zu dem Rechner automatisch übertragen werden.

Das Verfahren 100 kann zudem optionale Schritte umfassen, welche in Fig. 1 als gestrichelte Blöcke dargestellt sind. Bei einem Ausführungsbeispiel umfasst das Verfahren 100 optional ein Empfangen 110 eines Auslösersignals durch das Bordgerät, wie in Fig. 1 gezeigt. Dabei erfolgt das Senden des Anforderungssignals in Reaktion auf das Auslösersignal. Mit anderen Worten überträgt die App das Anforderungssignal im Fahrzeug drahtlos an die interne Kontrolleinheit (beispielsweise mittels WIFI, Bluetooth, NFC). Die interne Kontrolleinheit kann die VIN an den Rechner übertragen und die TAN anfordern. Alternativ kann der Benutzer die Anforderung in einem Menü im Fahrzeug verbauten Rechners mit einer Anzeige-und Bedieneinheit, z.B. Radionavigationssystem oder einem modularen Infotainment-Baukasten (MIB) auslösen. Der MIB kann Anforderung an die interne Kontrolleinheit weiterleiten. Die interne Kontrolleinheit kann in Reaktion darauf die VIN an den Rechner übertragen und die TAN anfordern.

In Reaktion auf das Senden 120 des Anforderungssignals wird der Authentifizierungscode von dem Rechner an das Fahrzeug mit der entsprechenden VIN übermittelt. Bei manchen Ausführungsbeispielen umfasst das Verfahren 100 optional ein Darstellen 140 des Authentifizierungscodes durch eine Anzeigeeinrichtung als zweidimensionalen Matrix-Code. Dabei ist die Anzeigeeinrichtung an das Bordgerät gekoppelt. Der zweidimensionale Matrix-Code kann z.B. ein Schnellantwort-Code (Quick Response Code, QR-Code) sein. Bei einigen Ausführungsbeispielen umfasst das Verfahren 100 optional ein Erfassen 150 des Authentifizierungscodes von einer Anzeigeeinrichtung durch das mobile Gerät. Das mobile Gerät kann hierzu einen optischen Sensor, z.B. Kamera, Infrarotsensor oder Scanner, umfassen. Bei manchen Ausführungsbeispielen umfasst das Verfahren 100 optional ein Übertragen 160 des Authentifizierungscodes durch das mobile Gerät an den Rechner.

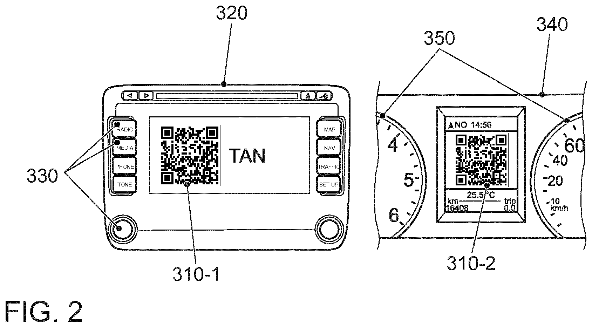

Das in Fig. 1 beschriebene Verfahren 100 kann mit anderen Worten z.B. ein Smartphone des Benutzers für den Registrierungsprozess nutzen. Hierzu kann eine von dem Smartphone umfasste Kamera sowie die genannte App in Verbindung mit Matrix-Codes verwendet werden, die auch im Fahrzeug angezeigt werden können. Fig. 2 illustriert das Anzeigen eines hier als QR-Code dargestellten Matrix-Codes 310 auf einer Anzeigefläche innerhalb eines Fahrzeugs, welche an das Bordgerät gekoppelt ist. Die Anzeigefläche kann beispielsweise von einem Fahrassistenzsystem 320 umfasst sein, und mit weiteren Bedienelementen 330, wie z.B. Tasten oder Drehschaltern gekoppelt sein. Alternativ kann die Anzeigefläche auch auf einem Armaturenbrett 340 mit weiteren Instrumenten 350 (z.B. Tacho oder Drehzahlmesser) angeordnet sein.

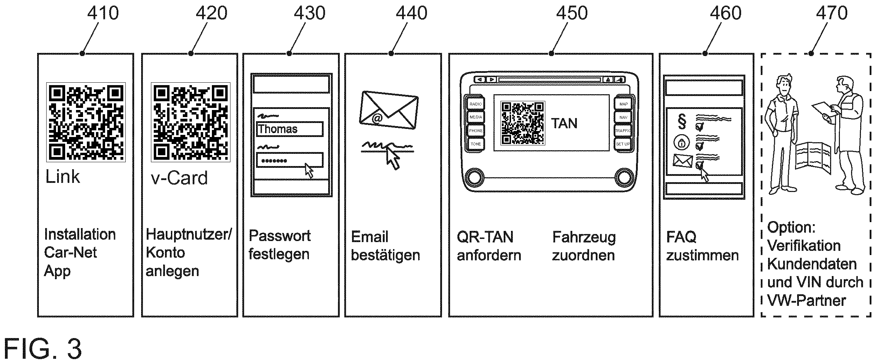

Fig. 3 zeigt eine Illustration von Bedienschritten aus Sicht des Benutzers im Rahmen des Verfahrens 100. Zunächst wird eine Installation 410 einer App zum Informationsaustausch in einem Fahrzeugnetzwerk vorgenommen. Hierzu kann ein Verweis (Link), z.B. als QR-Code in einem dem Fahrzeug zugeordneten Bordbuch oder einer Broschüre vorliegen. Der QR-Code kann von einem auf einem mobilen Gerät laufenden Programm als Link auf die App in einer Anwendungsdatenbank (App-Store) erkannt werden. Das mobile Gerät kann somit die App installieren. Von einem Rechner oder Rechenzentrum des Anbieters kann die App eine eindeutige Identifikationsnummer (App-ID) erhalten. Ein manuelles Eingeben des Links oder ein Suchen der App in dem App-Store kann dadurch entfallen.

Es folgt ein Anlegen 420 eines Benutzerkontos. Der Benutzer kann hierbei ein Hauptnutzer des Fahrzeugs sein. Die App kann dazu ausgebildet sein, Kundendaten wie Name oder Adresse aus internen Daten des mobilen Gerätes oder aus einem QR Code (beispielsweise eine elektronische Visitenkarte, v-Card) zu erfassen. Der Benutzer kann dadurch eine Registrierungs-Identifikationsnummer erhalten. Es kann ein Festlegen 430 eines individuellen Passwortes folgen. Mittels eines doppelten Anmeldeverfahrens (Double Opt-In) kann der Benutzer eine Bestätigung 440 seiner E-Mail-Adresse vornehmen. Dadurch kann die E-Mail-Adresse des Benutzers verifiziert werden, was eine Bedienungssicherheit erhöhen kann. Zudem kann der Benutzer somit mit seiner Registrierungs-Identifikationsnummer registriert und der App-ID seiner App zugeordnet werden. Eine manuelle Eingabe von Benutzerdaten wie Name oder E-Mail-Adresse kann dabei entfallen. Die Bestätigung 440 kann auch auf einem weiteren Gerät, z.B. einem stationären Computer, erfolgen.

Ein weiterer Schritt umfasst ein Anfordern 450 einer TAN für das Fahrzeug mit individueller VIN. Alternativ kann die VIN manuell in die App eingegeben, und somit die TAN angefordert werden. Die TAN kann im Fahrzeug als QR-Code dargestellt werden (vgl. Fig. 2) und von der App mit der App-ID erfasst werden. TAN und App ID können vermittels der App an den Rechner gesendet werden. Dadurch kann eine Zuordnung des Fahrzeugs zu der App-ID und damit zu dem Benutzer ermöglicht werden. Eine graphische Anzeigevorrichtung bei dem Fahrzeug kann hierbei auch entfallen, und eine Darstellung der TAN beispielsweise auf einer Digitalanzeige erfolgen.

Ferner kann ein Zustimmen 460 des Benutzers zu allgemeinen Geschäftsbedingungen, einer Datenschutzerklärung, und optional einer Marketing-Einverständniserklärung erfolgen. Legaltexte in diesem Zusammenhang können dem Benutzer über E-Mail zugeschickt werden. Hierdurch kann ein Vertrag oder Registrierungsprozess für einen Benutzer mit einer individuellen ID abgeschlossen werden, und der Benutzer für das Fahrzeug mit individueller VIN als Hauptnutzer registriert sein. Optional kann eine Verifikation 470 durch einen Vertragspartner (z.B. Anbieter, Händler, etc.) vorgenommen werden, bei der der Benutzer Dokumente (z.B. Lichtbildausweis, Fahrzeugpapiere) vorlegt, und der Vertragspartner die Benutzerangaben (ID, Name, Adresse, VIN) in einem Service-Portlet bestätigen kann. Anders ausgedrückt kann so eine Zuordnung zwischen Benutzer und Fahrzeug verifiziert werden.

Einige der genannten Ausführungsbeispiele können ein mobiles Gerät wie z.B. ein Smartphone mit einer Kamera, eine Internetverbindung oder einen Email-Zugang mit einbeziehen. Durch Ausführungsbeispiele kann eine Registrierung im Fahrzeug erfolgen und im Vergleich zu herkömmlichen Methoden schneller oder sogar unmittelbar wirksam werden. Eine manuelle Eingabe von Links, Adressen, VIN, TAN, sowie ein privater Rechner (Personal Computer, PC) mit einem Portal für eine Registrierung kann unter Umständen entfallen. Optional kann die Verifikation durch einen Vertragspartner vor Ort erfolgen. Ausführungsbeispiele können eine vereinfachte Möglichkeit bieten, um Hauptnutzer-, App- und Fahrzeugdaten auf einer Datenbank des Rechners zu verknüpfen, oder auch einen Vertrag mit dem Benutzer abzuschließen.

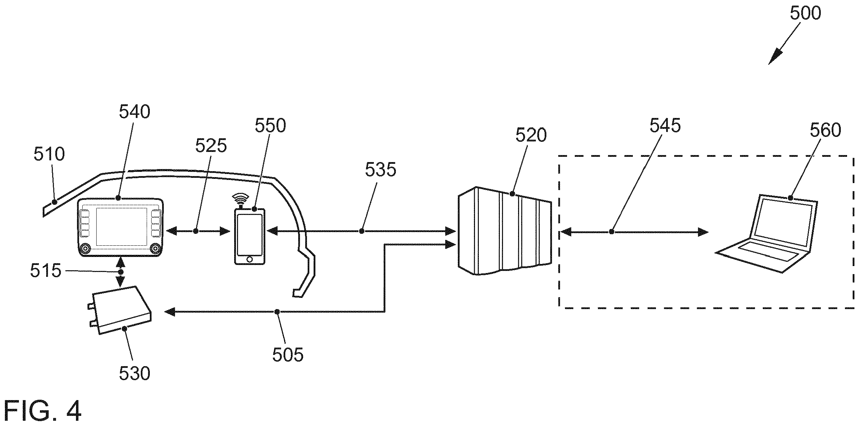

Fig. 4 zeigt ein System 500 umfassend ein Kraftfahrzeug 510 und einen Rechner 520, der z.B. von einem Rechenzentrum umfasst ist. Einige Ausführungsbeispiele beziehen sich dabei auf das Kraftfahrzeug 510. Das Kraftfahrzeug 510 umfasst ein Bordgerät 530, z.B. eine interne Kontrolleinheit. Das Bordgerät 530 ist dazu ausgebildet, ein Anforderungssignal für einen Authentifizierungscode an den Rechner 520 zu senden, und den Authentifizierungscode von dem Rechner 520 zu empfangen. Dies kann über eine erste Verbindung 505 geschehen, welche eine Mobilfunk- oder Internetverbindung, und zudem verschlüsselt sein kann.

Einige Ausführungsbeispiele beziehen sich zudem auf das System 500. Das System 500 umfasst das Kraftfahrzeug 510 und den Rechner 520. Der Rechner 520 ist dazu ausgebildet, das Anforderungssignal für den Authentifizierungscode zu empfangen. Das Anforderungssignal umfasst zusätzlich eine Information über eine Identität des Kraftfahrzeuges 510. Außerdem ist der Rechner 520 dazu ausgebildet, in Reaktion auf das Anforderungssignal den Authentifizierungscode an das Bordgerät 530 des Kraftfahrzeuges 510 bereitzustellen. Das Bordgerät kann über eine fahrzeuginterne Verbindung 515, z.B. BAP oder CAN-Bus ein Signal zum Darstellen des Authentifizierungscodes an ein Anzeigegerät 540 in dem Fahrzeug 510 übertragen.

Das Anforderungssignal kann zuvor durch ein mobiles Gerät 550 des Benutzers über eine drahtlose Verbindung 525 erfolgt sein, welche ebenfalls verschlüsselt sein kann. Das mobile Gerät 550 kann z.B. ein Mobiltelefon oder Tablet sein, und eine Anwendung (App) zur Unterstützung einer Kommunikation innerhalb eines Fahrzeugnetzwerkes aufweisen. Das mobile Gerät 525 weist eine App-ID auf, welche beim Senden des Anforderungssignals zusammen mit einer VIN des Fahrzeugs 510 an den Rechner 520 übermittelt wird.

Ferner kann das mobile Gerät 550 einen optischen Sensor oder eine Kamera aufweisen, mittels der der Authentifizierungscode von dem Anzeigegerät 540 erfasst wird, und über eine zweite Verbindung 535 von dem mobilen Gerät 550 an den Rechner 520 übermittelt wird. Die zweite Verbindung 535 kann eine Mobilfunk- oder Internetverbindung, und zudem verschlüsselt sein.

Optional kann eine Anforderung des Authentifizierungscodes über einen privaten Rechner 560 (PC) erfolgen, welcher eine Internetverbindung 545 aufweist und einen Zugriff auf ein Portal des Rechners 520 ermöglicht. Bei einigen Ausführungsbeispielen kann dies jedoch entfallen.

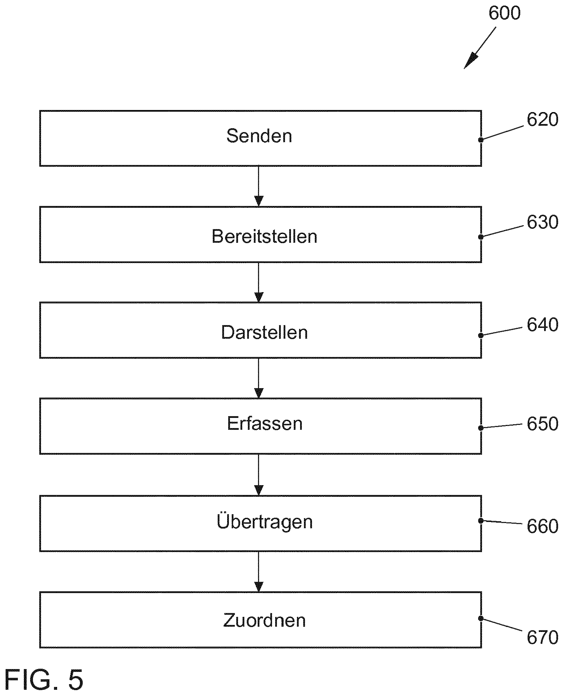

Fig. 5 zeigt ein Flussdiagramm eines Verfahrens 600 zum Zuordnen einer Identität eines Benutzers zu einer Identität eines Kraftfahrzeuges. Das Verfahren 600 kann mittels des in Fig. 4 gezeigten Systems 500 mit Kraftfahrzeug 510, Rechner 520 und mobilem Gerät 550 angewendet werden. Das Verfahren 600 umfasst ein Senden 620 eines Anforderungssignals für einen Berechtigungscode an einen Rechner. Dabei umfasst das Anforderungssignal zusätzlich eine Information über eine Identität des Kraftfahrzeuges. Das Verfahren 600 umfasst außerdem ein Bereitstellen 630 des Berechtigungscodes durch den Rechner an ein von dem Kraftfahrzeug umfasstes Bordgerät. Zudem umfasst das Verfahren 600 ein Darstellen 640 des Berechtigungscodes durch eine von dem Bordgerät umfasste Anzeigeeinrichtung als zweidimensionalen Matrix-Code. Das Verfahren 600 umfasst ferner ein Erfassen 650 des Berechtigungscodes von einer Anzeigeeinrichtung durch ein mobiles Gerät. Weiterhin umfasst das Verfahren 600 ein Übertragen 660 des Berechtigungscodes und einer Erkennungsinformation durch das mobile Gerät an den Rechner. Außerdem umfasst das Verfahren 600 ein Zuordnen 670 des Berechtigungscodes und der Information über die Identität des Kraftfahrzeuges zu einer zuvor durch den Rechner abgespeicherten Identität des Benutzers anhand der Erkennungsinformation. Das Verfahren 600 kann eine Identifizierung eines Hauptnutzers eines Fahrzeugs mit Hilfe einer auf dem mobilen Gerät laufenden App ermöglichen. Das Verfahren 600 kann zudem für eine vereinfachte Registrierung eines Benutzers für ein Kraftfahrzeug verwendet werden. Ferner kann das Verfahren 600 einen optischen Austausch von Daten ermöglichen.

Bei einigen Ausführungsbeispielen des Verfahrens 600 kann ein Link zu der App als QR-Code in einem Bordbuch oder einer Broschüre vorhanden sein. Dies kann es ermöglichen, dass eine Suche nach der App in einem App-Store entfällt. Ferner kann eine V-Card des Benutzers als QR-Code erfassbar sein, und somit die manuelle Eingabe der Kundendaten (Name, Adresse, email) entfallen. Durch Anforderung der TAN aus dem Fahrzeug mit VIN heraus kann ggf. eine Eingabe der VIN entfallen. Durch Erfassen der TAN im Fahrzeug als QR-Code kann eine Eingabe eines Sicherheitscodes oder eine separate Verknüpfung der App mit zusätzlichen Codes möglicherweise entfallen. Eine Eingabe eines Passwortes oder Antworten zu Identitätsfragen des Benutzers kann bei anderen Ausführungsbeispielen manuell in der App stattfinden. Ferner kann eine Eingabe der TAN für eine Zuordnung der App zu dem Benutzer entfallen, und die Zuordnung automatisch erfolgen.

Ausführungsbeispiele können eine Anzeige eines informationstechnischen Schlüssels (TAN) in optischer Form (z.B. QR-Code) und optional ein Erfassen desselben durch ein mobiles Gerät, z.B. Smartphone mit Kamera, ermöglichen. Von Seiten eines Benutzers kann so möglicherweise ein Ablesen, Notieren und Wiedereingeben des Codes nicht mehr erforderlich sein. Ebenso kann ggf. eine manuelle Handhabung weiterer Codes für eine Zuordnung der App entfallen. Dies kann sich unmittelbar auf ein Ergebnis auswirken; mit anderen Worten kann sich unter Umständen somit eine Wartezeit durch ein Wegfallen von Versandlaufzeiten oder Überweisungen verringern. Auch kann eine Logistik von physischen Komponenten entfallen. Eine Fehleranfälligkeit oder eine Anzahl verwendeter Komponenten zum Durchführen eines der Verfahren kann ferner möglicherweise verringert werden.

Ausführungsbeispiele können in solchen Kraftfahrzeugen angewendet werden, in denen mobile Onlinedienste bereitgestellt werden. Die Kraftfahrzeuge können dabei eine grafikfähige Anzeigefläche, beispielsweise als Teil eines Radios, Navigationsgeräts, oder eines Kombinationsinstrumentes mit einem Multifunktionsbildschirm umfassen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Verfahren
- 110: Empfangen
- 120: Senden
- 130: Bereitstellen
- 140: Darstellen
- 150: Erfassen
- 160: Übertragen
- 310-1; 310-2: Matrix-Code
- 320: Fahrassistenzsystem
- 330: Weitere Bedienelemente
- 340: Armaturenbrett
- 350: Weitere Instrumente
- 410: Installation
- 420: Anlegen
- 430: Festlegen
- 440: Bestätigung
- 450: Anfordern
- 460: Zustimmen
- 470: Verifikation
- 500: System
- 505: Erste Verbindung
- 510: Kraftfahrzeug
- 515: Fahrzeuginterne Verbindung
- 520: Rechner
- 525: Drahtlose Verbindung
- 530: Bordgerät
- 535: Zweite Verbindung
- 540: Anzeigegerät
- 545: Internetverbindung
- 550: Mobiles Gerät
- 560: Privater Rechner
- 600: Verfahren
- 620: Senden
- 630: Bereitstellen
- 640: Darstellen
- 650: Erfassen
- 660: Übertragen
- 670: Zuordnen

## Patentansprüche

1. Verfahren (600) zum Zuordnen einer Identität eines Benutzers zu einer Identität eines Kraftfahrzeuges, umfassend:
Senden (620) eines Anforderungssignals für einen Berechtigungscode an einen Rechner, wobei das Anforderungssignal zusätzlich eine Information über eine Identität des Kraftfahrzeuges umfasst;
Bereitstellen (630) des Berechtigungscodes durch den Rechner an ein von dem Kraftfahrzeug umfasstes Bordgerät;
Darstellen (640) des Berechtigungscodes durch eine von dem Bordgerät umfasste Anzeigeeinrichtung als zweidimensionalen Matrix-Code;
Erfassen (650) des Berechtigungscodes von einer Anzeigeeinrichtung durch ein mobiles Gerät;
Übertragen (660) des Berechtigungscodes und einer Erkennungsinformation des mobilen Geräts durch das mobile Gerät an den Rechner;
Zuordnen (670) des Berechtigungscodes und der Information über die Identität des Kraftfahrzeuges zu einer zuvor durch den Rechner abgespeicherten Identität des Benutzers anhand der Erkennungsinformation.

2. Programm mit einem Programmcode zum Durchführen eines der Verfahren gemäß Anspruch 1, wenn der Programmcode auf einem Computer, einem Prozessor oder einer programmierbaren Hardwarekomponente ausgeführt wird.

## Claims

1. Method (600) for assigning an identity of a user to an identity of a motor vehicle, comprising:
sending (620) a request signal for an authorization code to a computer, wherein the request signal, in addition, comprises information about an identity of the motor vehicle;
providing (630) the authorization code to an onboard device that the motor vehicle comprises by means of the computer;
presenting (640) the authorization code as a two-dimensional matrix code by means of a display apparatus that the onboard device comprises;
capturing (650) the authorization code from a display apparatus by means of a mobile device;
transmitting (660) the authorization code and recognition information of the mobile device to the computer by means of the mobile device;
assigning (670) the authorization code and the information about the identity of the motor vehicle to an identity of the user, which the computer has stored beforehand, on the basis of the recognition information.

2. Program having a program code for performing one of the methods according to Claim 1 when the program code is executed on a computer, a processor or a programmable hardware component.

## Revendications

1. Procédé (600) permettant d'attribuer une identité d'un utilisateur à une identité d'un véhicule automobile, comprenant les étapes consistant à :
envoyer (620) un signal pour demander un code d'autorisation à un ordinateur, le signal de demande comprenant de plus une information concernant une identité du véhicule automobile ;
fournir (630) le code d'autorisation par l'ordinateur à un appareil de bord compris dans le véhicule automobile ;
représenter (640) le code d'autorisation par un dispositif d'affichage compris dans l'appareil de bord sous la forme d'un code matriciel bidimensionnel ;
acquérir (650) le code d'autorisation par un appareil mobile depuis un dispositif d'affichage ;
transmettre (660) à l'ordinateur, par l'appareil mobile, le code d'autorisation et une information de reconnaissance de l'appareil mobile ;
attribuer (670) le code d'autorisation et l'information concernant l'identité du véhicule automobile à une identité de l'utilisateur stockée par l'ordinateur à l'aide de l'information de reconnaissance.

2. Programme, comprenant du code programme pour exécuter l'un des procédés selon la revendication 1 lorsque le code programme est exécuté sur un ordinateur, un processeur ou un composant matériel programmable.
